# EUROPÄISCHE PATENTANMELDUNG

(11) **EP 0 560 075 A1**
(43) Veröffentlichungstag der Anmeldung: **15.09.1993**
(21) Anmeldenummer: 93102199.2
(22) Anmeldetag: 12.02.1993
(51) Int. Cl.: H04B 17/00

(54) **Mobiles Testgerät für ein Mobilfunk-System**

(30) Priorität: 21.02.1992 DE 4205239
(71) Anmelder: Alcatel SEL Aktiengesellschaft, D-70435 Stuttgart (DE)
(72) Erfinder: Szabo, Laszlo, Dr., W-7015 Korntal (DE)
(74) Vertreter: Pohl, Herbert, Dipl.-Ing

(57) **Zusammenfassung**

Zum Testen der Funktionsfähigkeit eines gegebenen Mobilfunk-Systems mit seinen System-Komponenten, wie z.B. Funkstation, Feststationssteuerung, Mobilvermittlung etc., ist der Einsatz eines hierfür spezifizierten mobilen Testgerätes besonders gut geeignet.

Am Einsatzort sind derzeit Mittel (Rechner, Terminal etc.) und Personal (System-Experten) zur Bedienung des mobilen Testgerätes erforderlich.

Aufgabe der Erfindung ist es, das mobile Testgerät derart auszuführen, daß sein mobiler Einsatz genutzt und der Aufwand an Geräten und Personal am Einsatzort eingespart wird.

Dies wird durch eine Änderung vorhandener Schnittstellen und einen dadurch ermöglichten Austausch von Steuersignalen zwischen dem mobilen Testgerät und der Betriebs- und Wartungszentrale des Mobilfunk-Systems erreicht.

## Beschreibung

Die Erfindung betrifft ein mobiles Testgerät nach dem Oberbegriff des Anspruchs 1.

In einem gegebenen Mobilfunk-System sind zur Untersuchung seiner Funktionsfähigkeit (wie z.B. bei sehr hoher Teilnehmerzahl, hohem wechselnden Verkehrsaufkommen oder vielen Funkfeldbereichen mit stark unterschiedlichen Übertragungsverhältnissen) verschiedene Hilfsmittel bekannt.

Dies sind Meßgeräte oder komplexe Testmittel wie die auf Seite 96 der Zeitschrift "Funkschau", Nr. 25, Jahrgang 1991 dargestellte Teststation. Diese ergibt sich durch Einsatz des D-Netz-Testgerätes von Alcatel-SEL "zusammen mit einem Laptop, einem Terminal und einer Mensch-Maschine-Schnittstelle".

Dabei enthält das Testgerät eine Schnittstelle zur Ankopplung an das Mobilfunk-System über eine Testverbindung und eine weitere Schnittstelle zur Ankopplung an Mittel (wie z.B. der oben erwähnte Laptop) zur Bedienung des Testgerätes vor Ort durch entsprechend geschultes Personal (Experten).

Die Testverbindung ist z.B. eine nach GSM-Standard (GSM: Groupe Special Mobile, 1982 gebildetes Gremium der CEPT für den Pan-Europäischen Mobilfunk) spezifizierte Funkstrecke zwischen Testgerät und einer zu testenden Funkstation des Mobilfunk-Systems oder eine standardisierte PCM30-Übertragungsstrecke zur Ankopplung des Testgerätes an eine zu testende Feststationssteuerung des Mobilfunk-Systems. Die Verbindung zwischen Testgerät und dem am Bediener-Platz installierten Laptop ist z.B. nach V.24-Standard ausgelegt. Die gesamte Teststation, d.h. das Testgerät zusammen mit eingerichtetem Bediener-Platz, ist mobil und somit an verschiedenen Orten innerhalb des Mobilfunk-Systems einsetzbar.

Aufgabe der Erfindung ist es, ein mobiles Testgerät derart auszuführen, daß der Vorteil seines mobilen Einsatzes genutzt und der bislang notwendige Aufwand an zusätzlichen Geräten sowie Personal zum Aufbau einer mobilen Teststation eingespart wird.

Die Aufgabe wird erfindungsgemäß gelöst durch ein mobiles Testgerät nach der Lehre des Anspruchs 1.

Danach ist mittels der vorhandenen Schnittstellen ein Austausch von Steuersignalen vorgesehen, so daß das mobile Testgerät von einer Betriebs- und Wartungszentrale des Mobilfunk-Systems aus bedient werden kann. Somit entfällt eine Bedienung des mobilen Testgerätes an dessen Standort, da diese mit technischen Mitteln und Personal der jeweiligen Betriebs- und Wartungszentrale geleistet werden kann.

Dadurch, daß die einzelnen Betriebs- und Wartungszentrale aufgrund ihrer Überwachungs- und Steuerungsaufgaben im Mobilfunk-System weitgehend bereits über die zur Bedienung des mobilen Testgerätes notwendigen Mittel, wie z.B. Rechner, Terminal und System-Experten, verfügen, wird der Einsatz des mobilen Testgerätes ohne Aufwand an zusätzlichen Geräten sowie Personal ermöglicht.

Vorteilhafte Weiterbildungen der Erfindung sind den Unteransprüchen zu entnehmen.

Nach Anspruch 2 wird der Austausch von Steuersignalen in solchen Kommunikationsverbindungen eingerichtet, welche bereits im gegebenen Mobilfunk-System vorhanden sind und einem bestimmten Standard entsprechen, wie z.B. PCM30. Diese können sowohl drahtlose wie auch drahtgebundene Verbindungen sein. Die Steuersignale werden dabei z.B. über in diesen Verbindungen eingerichtete Zeit- oder Frequenzkanäle geführt. Eine Bereitstellung von zusätzlichen, d.h. neuen Verbindungen ist demnach nicht notwendig, sondern es werden vorhandene Mittel und Übertragungskapazitäten ausgenützt.

Nach Anspruch 3 bilden die zwei Schnittstellen zusammen eine neue einzige Schnittstelle. Diese entspricht einem Standard (z.B. die im GSM-Standard nach PCM 30 spezifizierte Abis-Schnittstelle) und erleichtert somit den Einsatz des mobilen Testgerätes in verschiedenen Mobilfunk-Systemen, sofern diese über System-Komponenten mit obigen Standard-Schnittstellen verfügen.

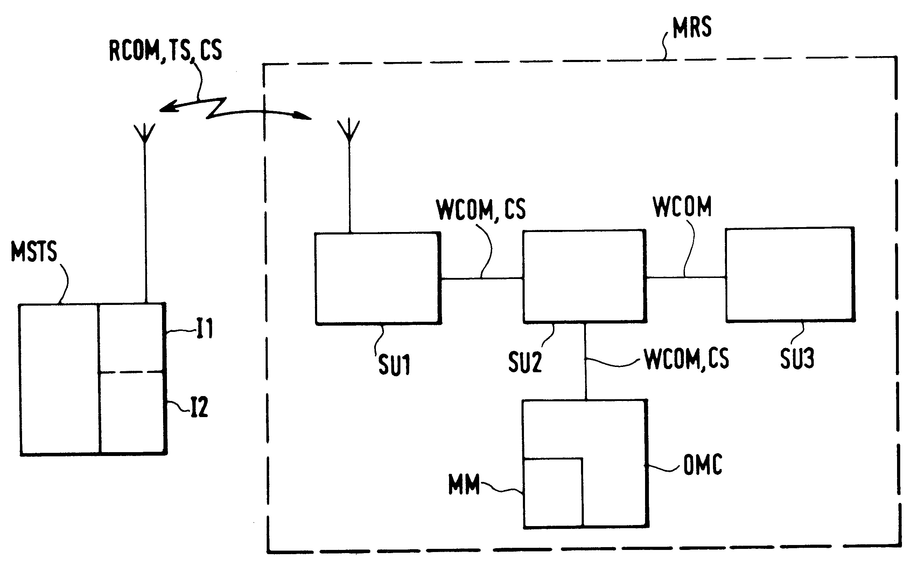

Im folgenden wird die Erfindung anhand eines Ausführungsbeispiels unter Zuhilfenahme der beiliegenden Zeichnung weiter erläutert.

Die Figur zeigt eine mögliche Zusammenstellung von System-Komponenten SUx eines gegebenen Mobilfunk-Systems MRS mit einem mobilen Testgerät MSTS zu einer Testeinrichtung.

Das gegebene Mobilfunk-System enthält eine Betriebs- und Wartungszentrale OMC mit einer integrierten Mensch-Maschine-Schnittstelle MM, verschiedene System-Komponenten (Funkstation SU1, Feststationssteuerung SU2, Mobilvermittlung SU3) und vorhandene Verbindungen xCOM, wobei die Verbindung zwischen dem mobilen Testgerät und der Funkstation RCOM eine TDMA-Funkverbindung mit acht Zeitschlitz-Kanälen nach GSM-Standard darstellt und die anderen Verbindungen WCOM drahtgebundene PCM30-Übertragungsstrecken darstellen.

Das mobile Testgerät enthält eine erste Schnittstelle I1 zur drahtlosen Ankopplung an die Funkstation und gemäß dem Stand der Technik zum Austausch von Testsignalen TS, welche hier zur Überprüfung der Funktionsfähigkeit der Funkstation dienen. Durch das mobile Testgerät wird beispielsweise der Einsatz von Mobilstationen simuliert. Die Testsignale entsprechen demnach Sende- und Empfangssignalen mindestens einer Mobilstation, wobei durch Formung der Sendesignale von dem mobilen Testgerät zahlreiche funktechnische Problemsituationen dargestellt werden können, wie z.B.: Fading, Mehrfachausbreitung, Doppler-Effekt und Handover.

Die für eine Bedienung des mobilen Testgerätes notwendigen Steuersignale CS werden über eine zweite Schnittstelle I2 geführt, welche gemäß dem Stand der Technik zur Ankopplung an eine vor Ort befindliche Mensch-Maschine-Schnittstelle genutzt werden kann (Austausch von Steuersignalen mit lokalem Bedienplatz, wie z.B. Laptop).

Erfindungsgemäß ist die zweite Schnittstelle mit der ersten Schnittstelle derart verknüpft, daß die Steuersignale zwischen der Mensch-Maschine-Schnittstelle innerhalb der Betriebs- und Wartungszentrale und dem mobilen Testgerät zur Bedienung desselben ausgetauscht werden. Die Verknüpfung beider Schnittstellen kann z.B. durch die Einrichtung gemeinsamer Übergabepunkte (Ports) oder durch einen internen gegenseitigen Protokollverkehr erzielt werden.

Im Ausführungsbeispiel werden die Steuersignale über die vorhandenen Verbindungen (d.h. der TDMA-Funkverbindung und zwei PCM30-Übertragungsstrecken im Mobilfunk-System) geführt.

Die Funkverbindung wird hier zur Übertragung der Testsignale und der Steuersignale genutzt. Demnach bilden die beiden Schnittstellen durch ihre Verknüpfung eine einzige Schnittstelle, welche hier als GSM-standardisiertes Air-Interface eingerichtet ist. Die Testsignale und Steuersignale werden dabei in verschiedenen TDMA-Zeitkanälen übertragen.

Zwei vorhandene PCM30-Übertragungsstrecken im Mobilfunk-System führen durch Einrichtung von mindestens einem Steuerkanal die Steuersignale, welche die Bedienung des mobilen Testgerätes von der Betriebs- und Wartungszentrale aus gewährleisten. Informationsdaten, d.h. insbesondere Meßdaten und Testergebnisse von der Funkstation, werden ebenfalls über diese Verbindungen in entsprechenden Kanälen übertragen.

Mittels Fernbedienung des mobilen Testgerätes können das Mobilfunk-System und System-Komponenten desselben (hier z.B. Funkstation) vollständig und ausschließlich von der Betriebs- und Wartungszentrale aus getestet werden.

Nutzt man dazu bereits im Mobilfunksystem vorhandene Verbindungen, so sind, wie in der dargestellten Testeinrichtung, keine zusätzlichen Verbindungen einzurichten.

Bei anderen Testkonfigurationen als die des Ausführungsbeispiels kann die erste Schnittstelle zum drahtgebundenen Austausch von Testsignalen dienen. Hierbei wird z.B. mittels PCM 30-Ankopplung des mobilen Testgerätes an eine zu testende Feststationssteuerung die Steuerung einer oder mehrerer Funkstationen simuliert und überprüft. Eine Zusammenfassung der beiden Schnittstellen zu einer einzigen standardisierten Abis-Schnittstelle ermöglicht eine einfache und schnelle Ankopplung an alle System-Komponenten, die ebenfalls über eine entsprechend standardisierte Schnittstelle verfügen.

## Patentansprüche

1. Mobiles Testgerät (MSTS) für ein Mobilfunk-System (MRS), wobei letzteres zu testende System-Komponenten (SUx) und mindestens eine Betriebs- und Wartungszentrale (OMC) enthält,
mit einer ersten Schnittstelle (I1) zum Austausch von Testsignalen (TS) zwischen dem mobilen Testgerät und mindestens einer der System-Komponenten und einer zweiten Schnittstelle (I2) zum Austausch von Steuersignalen (CS) zwischen dem mobilen Testgerät und mindestens einer Mensch-Maschine-Schnittstelle,
**dadurch gekennzeichnet,** daß die zwei Schnittstellen (I1, I2) derart miteinander verknüpft sind, daß der Austausch der Steuersignale (CS) über mindestens eine der System-Komponenten zwischen dem mobilen Testgerät und mindestens einer in der Betriebs- und Wartungszentrale (OMC) eingerichteten Mensch-Maschine-Schnittstelle (MM) erfolgt.

2. Mobiles Testgerät nach Anspruch 1, dadurch gekennzeichnet, daß der Austausch der Steuersignale über im Mobilfunk-System standardisierte Kommunikationsverbindungen (xCOM) erfolgt.

3. Mobiles Testgerät nach Anspruch 1, dadurch gekennzeichnet, daß die zwei Schnittstellen zusammen eine standardisierte Schnittstelle bilden für den Austausch der Testsignale und der Steuersignale.
